# EUROPÄISCHE PATENTANMELDUNG

(11) **EP 1 595 901 A1**
(43) Veröffentlichungstag der Anmeldung: **16.11.2005**
(21) Anmeldenummer: 05007600.9
(22) Anmeldetag: 07.04.2005
(51) Int. Cl.: C08G 18/10, C08G 18/28

(54) **Verfahren zur Herstellung von Polyurethan-Weichintegralschaumstoffen**

(30) Priorität: 11.05.2004 DE 102004023770
(71) Anmelder: BASF Aktiengesellschaft, 67056 Ludwigshafen (DE)
(72) Erfinder: Jahncke, Manfred, 31515 Wunstorf (DE); Bierstedt, Dieter, 49448 Hüde (DE); Klanke, Anke, 49356 Diepholz (DE); Schütte, Christin, 49078 Osnabrück (DE)

(57) **Zusammenfassung**

Gegenstand der Erfindung ist ein Verfahren zur Herstellung von viskoelastischen Polyurethan-Weichintegralschaumstoffen durch Umsetzung von
a) Polyisocyanaten mit
b) Verbindungen mit mindestens zwei mit Isocyanatgruppen reaktiven Wasserstoffatomen in Anwesenheit von
c) Treibmitteln,
dadurch gekennzeichnet, dass
als Polyisocyanate a) Diphenylmethandiisocyanat und/oder dessen Umsetzungsprodukte und/oder Gemische aus Diphenylmethandiisocyanat mit Polymethylen-polyphenyl-polyisocyanaten eingesetzt werden, als Treibmittel c) mindestens ein physikalisches Treibmittel eingesetzt wird, und die Umsetzung in Anwesenheit von mindestens einer Verbindung mit einem mit Isocyanatgruppen reaktiven Wasserstoffatom durchgeführt wird.

## Beschreibung

Gegenstand der Erfindung ist ein Verfahren zur Herstellung von Polyurethan - Weichschaumstoffen mit kompakter Außenhaut und zelligem Kern.

Die Herstellung von Polyurethan-Weichschaumstoffen mit kompakter Außenhaut und zelligem Kern durch Umsetzung von Polyisocyanaten und Verbindungen mit mindestens zwei aktiven Wasserstoffatomen, häufig als Polyolkomponente bezeichnet, ist seit langem bekannt und vielfach in der Literatur beschrieben.

Polyurethan - Weichschaumstoffe mit kompakter Außenhaut und zelligem Kern, häufig auch als Weichintegralschaumstoffe bezeichnet, werden vielfältig eingesetzt, zumeist als Sitz- und Polstermaterial sowie für Kraftfahrzeuginneneinrichtungen, wie Lenkräder. Ihre Herstellung erfolgt üblicherweise, indem Polyisocyanate mit Verbindungen mit mindestens zwei mit Isocyanatgruppen reaktiven Wasserstoffatomen in geschlossenen Formen miteinander umgesetzt werden. Die Dichte derartiger Schaumstoffe liegt üblicherweise über 250 g/I.

Neuerdings werden Polyurethan-Weichintegralschaumstoffe verlangt, die als Polster-, Sitz- und Auflagematerial besondere dämmende und dämpfende Eigenschaften aufweisen. Hierfür bilden die Verbesserung der Sicherheit sowie die Erhöhung des Komforts die wesentlichen Triebkräfte.

Eine wesentliche Größe für die Bestimmung der viskoelastischen Eigenschaften ist die Rückprallelastizität nach DIN EN ISO 8307, die bei viskoelastischen Schaumstoffen unter 30 % liegt, und die Hysterese bei Stauchung nach DIN EN ISO 3386-1 die bei viskoelastischen Schaumstoffen über 35 % liegt.

Eine weitere wesentliche Kenngröße für Polyurethan-Weichintegralschaumstoffe ist die Härte der Schaumstoffe. Je nach dem gewünschten Einsatzgebiet der Schaumstoffe können sehr unterschiedliche Härtegrade erwünscht sein. Bei Weichintegralschäumen ist neben der Stauchhärte die Oberflächenhärte (Shore L oder Shore A nach DIN 53505) ein wichtiger Parameter.

Üblicherweise werden die Produkteigenschaften durch Variation der Einsatzstoffe und der Einsatzmengen eingestellt. Die größten Möglichkeiten zur Variation hat man auf der Polyolseite. Eine Möglichkeit ist, neben der Variation von Art und Menge der Polyole und Kettenverlängerer sowie Vernetzer, die Mitverwendung von monofunktionellen Verbindungen mit einem aktiven Wasserstoffatom im Molekül.

Es sind eine Reihe von Dokumenten bekannt, in denen die Verwendung von monofunktionellen Verbindungen bei der Herstellung von Polyurethan-Weichschaumstoffen beschrieben ist. So beschreibt EP 908 478 ein Verfahren zur Herstellung von viskoelastischen Polyurethan-Weichschaumstoffen, bei dem (hetero)cyclische Monoole eingesetzt werden. Bei den in diesem Dokument beschriebenen Schaumstoffen handelt es sich jedoch nicht um Integralschaumstoffe.

In WO 01/57104 werden viskoelastische Polyurethan-Weichschaumstoffe beschrieben, die unter Mitverwendung von Polyether- oder Polyester-Monoolen mit einem Molgewicht von >1000 g/mol und einem hohen Gehalt an Ethylenoxid-Einheiten in der Kette hergestellt werden. Derartige Monoole sind in ihrer Herstellung teuer. Bei den in diesem Dokument beschriebenen Schaumstoffen handelt es sich ebenfalls nicht um Integralschaumstoffe.

US 6,491,846 beschreibt die Herstellung von viskoelastischen Schäumen. Als Polyolkomponente werden Blends aus einem Polyoxyalkylen-Monool mit einem Molekulargewicht von größer 200, das gemeinsam mit Glyzerin in Anwesenheit von DMC-Katalysatoren mit Alkylenoxiden umgesetzt wird, eingesetzt. Der Anteil an Monool im Blend beträgt etwa 30 %. Damit sollen die unterschiedlichen Funktionalitäten der DMCkatalysierten Polyetheralkohole gegenüber basisch katalysierten Polyetheralkoholen ausgeglichen werden, um Produkte mit Drop-in Eigenschaften zu erhalten.

In EP 913 414 werden weiche Polyurethan-Integralschaumstoffe für Inneneinrichtungen von Kraftfahrzeugen beschrieben, die unter Mitverwendung von Monoolen mit einem Molekulargewicht von kleiner 100 hergestellt werden. Als Treibmittel wird Wasser verwendet. Die Verwendung von Wasser als Treibmittel für Integralschaumstoffe kann jedoch zu Nachteilen bei der Ausbildung der Oberfläche führen. Außerdem zeigen die dort beschriebenen Schaumstoffe keine viskoelastischen Eigenschaften.

Aufgabe der Erfindung war es, ein Verfahren zur Herstellung von Polyurethan - Weichintegralschaumstoffen mit kompakter Außenhaut und zelligem Kern zu entwickeln, die viskoelastische Eigenschaften aufweisen, deren Oberflächenhärte optional sehr weich eingestellt werden kann, die eine störungsfreie Oberfläche besitzen und in für einen Produktionsbetrieb akzeptablen Zeiten entformt werden können.

Die Aufgabe konnte überraschenderweise gelöst werden durch ein Verfahren zur Herstellung von viskoelastischen Polyurethan-Weichintegralschaumstoffen durch Umsetzung von
a) Polyisocyanaten mit
b) Verbindungen mit mindestens zwei mit Isocyanatgruppen reaktiven Wasserstoffatomen in Gegenwart von
c) Treibmitteln,
dadurch gekennzeichnet, dass als Polyisocyanate a) Diphenylmethandiisocyanat und/oder dessen Umsetzungsprodukte und/oder Gemische aus Diphenylmethandiisocyanat mit Polymethylen-polyphenyl-polyisocyanaten eingesetzt werden, als Treibmittel c) mindestens ein physikalisches Treibmittel eingesetzt wird, und dass bei der Herstellung der Schaumstoffe mindestens eine Verbindung mit einem mit Isocyanatgruppen reaktiven Wasserstoffatom eingesetzt wird.

Gegenstand der Erfindung sind somit das beschriebene Verfahren zur Herstellung von viskoelastischen Polyurethan-Weichintegralschaumstoffen sowie die nach diesem Verfahren hergestellten Schaumstoffe.

Die eingesetzte Verbindung mit einem mit Isocyanatgruppen reaktiven Wasserstoffatom ist zumeist ein monofunktioneller Alkohol, auch als Monool bezeichnet.

Das Monool wird vorzugsweise mit den Verbindungen mit mindestens zwei mit Isocyanatgruppen reaktiven Wasserstoffatomen gemischt und so mit den Polyisocyanaten a) umgesetzt.

In einer besonderen Ausführungsform des erfindungsgemäßen Verfahrens wird das Monool mit einem stöchiometrischen Überschuss an Polyisocyanat a) umgesetzt und das so erhaltene Zwischenprodukt mit den Verbindungen mit mindestens zwei mit Isocyanatgruppen reaktiven Wasserstoffatomen zum Polyurethan-Weichintegralschaumstoff umgesetzt. Es ist auch möglich, einen Teil des Monools, vorzugsweise 10 bis 90 Gew.-%, mit Polyisocyanat a) umzusetzen und den anderen Teil den Verbindungen mit mindestens zwei mit Isocyanatgruppen reaktiven Wasserstoffatomen b) zuzusetzen. Der Vorteil der Vorab-Reaktion des Monools mit dem Polyisocyanat sind eine längere Startzeit und ein langsamerer Steigverlauf bei der Verschäumung, was insbesondere bei Herstellung größerer Teile von Vorteil ist.

Die Umsetzungsprodukte der Monoole mit den Polyisocyanaten haben vorzugsweise einen NCO-Gehalt im Bereich zwischen 10 und 30, bevorzugt zwischen 13 und 25 Gew.-%. Die Umsetzung der Monoole mit den Polyisocyanaten erfolgt zumeist nach üblichen und bekannten Methoden. Bei der Umsetzung des Monools mit dem Polyisocyanat kann die gesamte Menge des für die Herstellung des Polyurethans eingesetzten Polyisocyanats mit dem Monool umgesetzt werden. Es ist auch möglich, nur eine Teilmenge des Polyisocyanats, vorzugsweise 10 bis 90 Gew.-%, mit dem Monool umzusetzen und das so erhaltene Umsetzungsprodukt vor der Umsetzung mit den Verbindungen mit mindestens zwei mit Isocyanatgruppen reaktiven Wasserstoffatomen b) mit weiterem Polyisocyanat zu mischen.

Das Monool wird vorzugsweise in einer Menge von bis zu 1,0 mol pro 1 kg Schaum, bevorzugt von bis zu 0,7 mol pro 1 kg Schaum eingesetzt. Vorzugsweise erfolgt der Einsatz des Monools in einer Menge von mindestens 0,05 mol pro 1 kg Schaum, bevorzugt mindestens 0,15 mol pro 1 kg Schaum. Bei Einsatz von weniger als 0,05 mol Monool pro 1 kg Schaum wirken sich die positiven Effekte des Zusatzes von Monool kaum noch aus.

Als Monoole können prinzipiell alle monofunktionellen Alkohole eingesetzt werden. Vorzugsweise werden solche eingesetzt, die ein Molekulargewicht von maximal 1000 g/mol aufweisen.

Vorzugsweise werden Monoole mit einer linearen oder verzweigten Kohlenstoffkette eingesetzt, wobei diese Kohlenstoffketten ein oder mehrere Ethergruppen enthalten können. Vorzugsweise handelt es sich bei diesen Monoolen um Alkohole mit einem Molekulargewicht von 32 bis 150 g/mol. Beispiele sind Ethanol, Isomere des Propanols, Butanols, Pentanols, Hexanols, Heptanols und Octanols, Ethylenglycol-monoethylether, Ethylenglykol-monoisopropylether, Ethylenglycol-monobutylether, 1-Methoxy-2-propanol und 3-Metyhoxy-3-methyl-1-butanol. Bevorzugt eingesetzt werden Ethanol, n-Propanol, Ethylenglycol-monoethylether, Ethylenglycol-monobutylether, 1-Methoxy-2-propanol und beliebige Mischungen dieser Verbindungen untereinander.

Ebenfalls möglich ist der Einsatz von Umsetzungsprodukten von niedermolekularen Monoolen, insbesondere solchen mit einem Molekulargewicht von unter 150 g/mol, mit Alkylenoxiden, insbesondere Ethylenoxid und/oder Propylenoxid, mit einem Molekulargewicht von bis zu 1000 g/mol. Diese Ausführungsform ist jedoch nicht bevorzugt, da auf Grund des höheren Molekulargewichts der Anteil der Monoole in der Reaktionsmischung zunimmt. Außerdem sind diese Umsetzungsprodukte teurer als die nicht umgesetzten niedermolekularen Monoole.

Als Polyisocyanat wird, wie oben ausgeführt, Dipehylmethandiisocyanat (MDI) und/oder dessen Umsetzungsprodukte, gegebenenfalls dessen höhere Homologen verwendet. Bei der Verwendung von reinem MDI können das reine 4,4'-Isomoere, das reine 2,4'-Isomere sowie beleibige Mischungen der beiden Isomere untereinander, die auch bis zu 5 Gew.-% des 2,2'-Isomeren enthalten können, eingesetzt werden. Gegebenenfalls können auch Gemische der MDI-Isomeren mit Polymethylen-polyphenylenpolyisocyanaten, häufig auch als Polymer-MDI oder Roh-MDI bezeichnet, eingesetzt werden. An Stelle der reinen Isocyanate oder im Gemisch mit diesen werden häufig sogenannte modifizierte Isocyanate eingesetzt. Derartige modifizierte Isocyanate können beispielsweise durch Einbau von Gruppen in die Polyisocyanate entstehen. Beispiele für derartige Gruppen sind Urethan-, Allophanat-, Carbodiimid-, Uretonimin-, Isocyanurat-, Harnstoff- und Biuretgruppen. Besonders bevorzugt sind mit Urethangruppen modifizierte Polyisocyanate, die üblicherweise durch Umsetzung der Isocyanate mit einem Unterschuss an H-funktionellen Verbindungen hergestellt werden. Derartige Verbindungen werden häufig als NCO-Prepolymere bezeichnet. Ebenfalls besonders bevorzugt sind Carbodiimid- oder Uretonimin-haltige Polyisocyanate, die durch gezielte katalysierte Umsetzung von Isocyanaten mit sich selber entstehen.

Als Verbindungen mit mindestens zwei mit Isocyanatgruppen reaktiven Wasserstoffatomen b) werden für das erfindungsgemäße Verfahren insbesondere Polyesterpolyole und/oder Polyetherpolyole eingesetzt.

Die eingesetzten Polyetherpolyole haben zumeist eine Funktionalität von 2 bis 4, vorzugsweise 2 bis 3, und ein Molekulargewicht von 2200 bis 8000 g/mol, vorzugsweise 3600 bis 6500 g/mol. Ihre Herstellung erfolgt zumeist durch basisch, meist alkalisch, katalysierte Anlagerung niederer Alkylenoxide, zumeist Ethylenoxid und/oder Propylenoxid, an hydroxylfunktionelle Startsubstanzen. Als Startsubstanzen werden zumeist Wasser und/oder 2- oder 3-funktionelle Alkohole, wie Ethylenglykol, Propylenglykol, Glyzerin oder Trimethylolpropan (TMP) eingesetzt. Als Alkylenoxide kommen, wie erwähnt, zumeist Ethylenoxid und/oder Propylenoxid zum Einsatz. Diese können einzeln, nacheinander oder im Gemisch miteinander angelagert werden. Bei Weichschaumpolyetherolen wird zur Erhöhung der Anteils an primären Hydroxylgruppen häufig an den Kettenenden ein Ethylenoxidblock angelagert.

Die eingesetzten Polyesterpolyole werden zumeist durch Kondensation von mindestens zweifunktionellen Carbonsäuren mit mindestens zweifunktionellen Alkoholen hergestellt. Für das erfindungsgemäße Verfahren kommen insbesondere solche mit einer Funktionalität von durchschnittlich 2,0 bis 3,5, vorzugsweise 2,0 bis 2,8, und einem Molekulargewicht von durchschnittlich 800 bis 4000 g/mol, insbesondere 1500 bis 2800 g/mol, zum Einsatz.

Zu den Verbindung mit mindestens 2 mit Isocyanat reaktiven Gruppen gehören auch Kettenverlängerer und Vernetzer. Dabei handelt es sich vorzugsweise um H-funktionelle Verbindungen mit Molekulargewichten von 62 bis 400 g/mol, insbesondere 2-bis 3-funktionelle Alkohole, Amine oder Aminoalkohole. Ihre Menge beträgt insbesondere 0 bis 25, vorzugsweise 2 bis 12 Gewichtsteile, bezogen auf 100 Gewichtsteile Polyetherpolyol und/oder Polyesterpolyol.

Zum Stabilisieren der weichen und, insbesondere bei sehr geringen Härten kaum bis gar nicht entformbaren erfindungsgemäßen Weichintegralschaumstoffe wird vorzugsweise mindestens ein kurzkettiger Vernetzer, d.h. ein kurzkettiges vernetzendes Molekül mit mindestens drei mit Isocyanatgruppen reaktiven Wasserstoffatomen eingesetzt. Beispiele für solche Vernetzer sind Glycerin, Trimethylolpropan und dessen Umsetzungsprodukte mit Alkylenoxiden, Pentaerythrit und dessen Umsetzungsprodukte mit Alkylenoxiden, Triethanolamin, Diethanolamin. Da der Gehalt an üblichen Kettenverlängerem bei Einsatz solcher Vernetzer verringert werden kann, kann der Einsatz dieser Vernetzer zusätzlich zum viskoelastischen Effekt beitragen.

Als Treibmittel c) werden, wie beschrieben, physikalisch wirkende Treibmittel eingesetzt. Hierbei handelt es sich vorzugsweise um gegenüber den Polyurethan-Aufbaukomponenten inerte Flüssigkeiten mit Siedepunkten unter 100°C, vorzugsweise unter 50°C, insbesondere im Bereich zwischen 50 und 30°C, die unter dem Einfluss der exothermen Polyadditionsreaktion verdampfen. Beispiele für derartige Flüssigkeiten sind Kohlenwasserstoffe, wie n-, Iso- und/oder Cyclopentan, Ether, Ketone, halogenierte Kohlenwasserstoffe, sofern sie kein Ozonabbaupotential aufweisen, oder Edelgase. Die Menge dieser physikalisch wirkenden Treibmittel beträgt zumeist 1 bis 20 Gew.-Teile, vorzugsweise 2 bis 15 Gew.-Teile, bezogen auf 100 Gew.-Teile der Verbindung mit mindestens 2 mit Isocyanat reaktiven Wasserstoffatomen. Die Menge der eingesetzten Treibmittel hängt von der angestrebten Dichte der Schaumstoffe ab.

Bevorzugt eingesetzt werden n-, Iso- und Cyclopentan, perfluorierte Verbindungen, wie 1,1,1,3,3-Pentafluorbutan, 1,1,1,3,3-Pentafluorpropan oder Mischungen von 80-93% 1,1,1,3,3-Pentafluorbutan mit 20-7% 1,1,1,2,3,3,3-Heptafluorpropan, Dimethoxymethan oder beliebige Mischungen aus mindestens zwei der genannten Treibmittel. Bei der Verwendung dieser Treibmittel kommt es zur Ausbildung einer besonders guten Integralhaut.

Gegebenenfalls kann Tetrafluorethan als Co-Treibmittel eingesetzt werden, insbesondere wenn Schaumstoffe mit niedriger Dichte hergestellt werden sollen.

Im Gemisch mit den physikalischen Treibmitteln kann auch Wasser verwendet werden, das mit Isocyanatgruppen unter Bildung von Kohlendioxid reagiert. Die Wassermenge beträgt hierbei zweckmäßigerweise 0 bis 1 Gew.-Teile, insbesondere 0,03 bis 0,5 Gew.-Teile, bezogen auf 100 Gew.-Teile der Verbindungen mit mindestens zwei mit Isocyanat reaktiven Gruppen. Bei einem zu hohen Anteil von Wasser als Treibmittel kann es zu Störungen der Oberfläche der Schaumstoffe kommen.

Daneben werden zur Herstellung der erfindungsgemäßen Polyurethan-Weichintegralschaumstoffe auch Katalysatoren sowie Hilfsmittel und/oder Zusatzstoffe eingesetzt.

Als Katalysatoren werden vorzugsweise die üblichen und bekannten Polyurethan-Katalysatoren eingesetzt. Hierbei handelt es sich beispielsweise um tertiäre Amine, wie Triethylendiamin, Metallsalze, wie Zinnverbindungen, sowie beliebige Mischungen aus diesen Verbindungen.

Als Hilfsmittel und/oder Zusatzstoffe werden beispielsweise Flammschutzmittel, oberflächenaktive Stoffe, Stabilisatoren, Zellregler, fungistatisch und bakteriostatisch wirkende Substanzen, Antistatika, Farbstoffe, Pigmente und Füllstoffe verwendet. Diese Stoffe werden dem Schaumsystem bei Bedarf zugesetzt, um ihm bestimmte Eigenschaften zu verleihen.

Nähere Angaben zu den verwendeten Komponenten sind beispielsweise dem Kunststoff-Handbuch, Band VII Polyurethane, Carl Hanser Verlag, München, Wien, 1. bis 3. Auflage, 1966, 1983 und 1993 zu entnehmen.

Üblicherweise werden die Verbindungen mit mindestens zwei mit Isocyanatgruppen reaktiven Wasserstoffatomen b), die Treibmittel c), die Monoole, die Katalysatoren sowie die gegebenenfalls mitverwendeten Hilfsmittel und/oder Zusatzstoffe zu einer sogenannten Polyolkomponente vermischt und in dieser Form mit den Polyisocyanaten a) zur Umsetzung gebracht.

Zur Herstellung der erfindungsgemäßen Polyurethan-Weichintgralschaumstoffe werden die Ausgangsverbindungen bei Temperaturen von 0 bis 100°C, vorzugsweise 15 bis 60°C, in solchen Mengenverhältnissen zur Reaktion gebracht, dass pro NCO-Gruppe 0,5 bis 2, vorzugsweise 0,8 bis 1,3 und insbesondere ungefähr 1 reaktive(s) Wasserstoffatom(e) vorliegen und, bei der Verwendung von Wasser als Treibmittel, die beiden Wasserstoffatome des Wassers in die Gesamtzahl der reaktiven Wasserstoffatome mit einberechnet werden.

Die erfindungsgemäßen Polyurethan-Weichintegralschaumstoffe werden vorzugsweise nach dem one-shot-Verfahren durch Vermischen der Polyol- und der Isocyanatkomponente hergestellt, wobei die Polyolkomponente, wie beschrieben, die Verbindungen mit mindestens zwei mit Isocyanat reaktiven Wasserstoffatomen, gegebenenfalls das Monool sowie Katalysatoren, Treibmittel sowie Hilfs- und/oder Zusatzstoffe und die Isocyanatkomponente das Polyisocyanat sowie gegebenenfalls Katalysatoren, physikalische Treibmittel sowie Hilfs- und/oder Zusatzstoffe enthält. Die beiden Komponenten werden intensiv vermischt und in geschlossenen Formwerkzeugen verschäumt.

Die erfindungsgemäßen Polyurethan-Weichintegralschaumstoffe können zur Erzeugung besonderer Oberflächeneigenschaften nachträglich oder im sogenannten inmould-coating-Verfahren mit einer Lackschicht versehen werden.

Die erfindungsgemäßen Polyurethan-Weichintegralschaumstoffe weisen hervorragende viskoelastische Eigenschaften auf, insbesondere Rückprallelastizitäten von kleiner 30 %, Stauchhärten von kleiner 35 kPa und eine Hysterese bei Stauchung von größer 30 %. Die Shore A Härte ist vorzugsweise <20, insbesondere <10. Die Shore L Härte liegt vorwiegend im Bereich zwischen 5 und 15.

Sie werden insbesondere für dämmende und dämpfende Elemente, insbesondere im Fahrzeugbau, für Polster-, Sitz- oder Liegemöbel,für Matratzen oder Kissen im orthopädischen und/oder medizinischen Bereich oder für Schuh(einlege)sohlen eingesetzt. Ein weiteres Einsatzgebiet sind Autosicherheitsteile, Auflageflächen, Armlehnen und ähnliche Teile im Möbelbereich und im Automobilbau

Die Erfindung soll an dem nachfolgenden Beispiel näher beschrieben werden.

Die in der Tabelle aufgeführten Polyol- und Isocyanatkomponenten wurden bei Raumtemperatur durch intensives Rühren vereinigt, in eine Form eingebracht und diese verschlossen. Nach Beendigung der Reaktion wurden die Teile entformt und die mechanischen Eigenschaften bestimmt.

| | Beispiel 1 | Beispiel 2 | Beispiel 3 | Beispiel 4 (Vergleich) |
|---|---|---|---|---|
| Polyolkomponente | | | | |
| Lupranol 2095 (Gew.-Teile) | 81,9 | 82,1 | 56,9 | 87,9 |
| Ethylenglycol (Gew.-Teile) | 2,5 | 1,5 | 2,5 | 1,5 |
| Glycerin (Gew.-Teile) | - | 0,8 | - | - |
| Lupragen N203 (Gew.-Teile) | 1,5 | 1,5 | 1,5 | 1,5 |
| n-Pentan S 80% (Gew.-Teile) | 6,0 | 6,0 | 6,0 | 6,0 |
| Schwarzpaste (Gew.-Teile) | 3,0 | 3,0 | 3,0 | 3,0 |
| Ethylenglycol-monoethylether (Gew.-Teile) | 5,0 | 5,0 | - | - |
| Wasser (Gew.-Teile) | 0,1 | 0,1 | 0,1 | 0,1 |
| | | | | |
| Isocyanat | | | | |
| Isocyanat 1 | 100:35 | 100:34 | | 100:23 |
| Isocyanat 1 mit 12% Ethylenglycol-monoethylether | | | 100:42 | |
| | | | | |
| Dichte Prüfplatte [kg/m³] | 330-350 | 330-350 | 330-350 | 330-350 |
| Rückprallelastizität (Kugel) (DIN EN ISO 8307) [%] | 27,3% | 23,1 | 26,9 | 55,9 |
| Stauchhärte 40% (DIN EN ISO 3386-1) | 22kPa | 23kPa | 28kPa | 95kPa |
| Hystereseberechnung bei Stauchung nach DIN EN ISO 3386-1 | 43% | 57% | 43% | 20% |
| Shore A (DIN 53505) | 1-2 | 1-2 | 1-3 | 22-25 |
| Shore L | 8-12 | 8-12 | 10-13 | 35-40 |
| Lupranol® 2095 - Mit Glycerin gestarteter Polyoxyethylen-Polyoxypropylen-Polyetheralkohol, Hydroxylzahl 35 mgKOH/g | | | | |
| Lupragen 203- Triethylendiamin. 33% ig in Ethylenglycol | | | | |
| Isocyanat 1 - Präpolymer aus 42 Gew.-% Rein-MDI, 60 Gew-% Polymer-MDI | | | | |
| (Lupranat® M20 der BASF AG) und 8 Gew.-% (Polypropylenglycol mit einem Molekulargewicht von 450 g/mol | | | | |

## Patentansprüche

1. Verfahren zur Herstellung von viskoelastischen Polyurethan - Weichintegralschaumstoffen durch Umsetzung von
a) Polyisocyanaten mit
b) Verbindungen mit mindestens zwei mit Isocyanatgruppen reaktiven Wasserstoffatomen in Anwesenheit von
c) Treibmitteln,
**dadurch gekennzeichnet, dass**
als Polyisocyanate a) Diphenylmethandiisocyanat und/oder dessen Umsetzungsprodukte und/oder Gemische aus Diphenylmethandiisocyanat mit Polymethylen-polyphenyl-polyisocyanaten eingesetzt werden, als Treibmittel c) mindestens ein physikalisches Treibmittel eingesetzt wird, und die Umsetzung in Anwesenheit von mindestens einer Verbindung mit einem mit Isocyanatgruppen reaktiven Wasserstoffatom durchgeführt wird.

2. Verfahren nach Anspruch 1, **dadurch gekennzeichnet, dass** die Verbindung mit einem mit Isocyanatgruppen reaktiven Wasserstoffatom eine lineare oder verzweigte Kohlenstoffkette aufweist.

3. Verfahren nach Anspruch 1, **dadurch gekennzeichnet, dass** die Verbindung mit einem mit Isocyanatgruppen reaktiven Wasserstoffatom ein Molekulargewicht von kleiner 150 g/mol aufweist.

4. Verfahren nach Anspruch 1, **dadurch gekennzeichnet, dass** die Verbindung mit einem mit Isocyanatgruppen reaktiven Wasserstoffatom durch Umsetzung eines monofunktionellen Alkohols mit einem Molekulargewicht von kleiner 150 g/mol mit Alkylenoxiden hergestellt ist und ein Molekulargewicht von kleiner 1000 g/mol aufweist.

5. Verfahren nach Anspruch 1, **dadurch gekennzeichnet, dass** die Verbindung mit einem mit Isocyanatgruppen reaktiven Wasserstoffatom in einer Menge von 0,05 bis 1 mol pro kg Schaum eingesetzt wird.

6. Verfahren nach Anspruch 1, **dadurch gekennzeichnet, dass** die Verbindung mit einem mit Isocyanatgruppen reaktiven Wasserstoffatom in einer Menge von 0,15 bis 0,7 mol pro kg Schaum, eingesetzt wird.

7. Verfahren nach Anspruch 1, **dadurch gekennzeichnet, dass** die Verbindung mit einem mit Isocyanatgruppen reaktiven Wasserstoffatom im Gemisch mit der Komponente b) eingesetzt wird.

8. Verfahren nach Anspruch 1, **dadurch gekennzeichnet, dass** die Verbindung mit einem mit Isocyanatgruppen reaktiven Wasserstoffatom zunächst mit einem Überschuss an Polyisocyanat umgesetzt und das so erhaltene Zwischenprodukt mit der Komponente b) zum Polyurethan-Weichintegralschaum umgesetzt wird.

9. Viskoelastischer Polyurethan-Weichintegralschaumstoff, herstellbar nach einem der Ansprüche 1 bis 8.

10. Viskoelastischer Polyurethan-Weichintgralschaumstoff nach Anspruch 9, **dadurch gekennzeichnet, dass** er eine Härte von maximal 20 Shore A aufweist.

11. Viskoelastischer Polyurethan-Weichintegralschaumstoff nach Anspruch 9, **dadurch gekennzeichnet, dass** er eine Härte von maximal 10 Shore A aufweist.
